# EUROPEAN PATENT APPLICATION

(11) **EP 4 807 813 A1**
(43) Date of publication of application: **16.09.2026**
(21) Application number: 24915067.3
(22) Date of filing: 06.12.2024
(51) Int. Cl.: H01M 4/587, H01M 4/133, H01M 4/1393, H01M 10/0525

(54) **COMPOSITE NEGATIVE ELECTRODE SHEET, PREPARATION METHOD THEREFOR AND LITHIUM ION BATTERY**

(30) Priority: 05.01.2024 CN 202410020224
(71) Applicant: ZHEJIANG ZEEKR INTELLIGENT TECHNOLOGY CO., LTD., Ningbo, Zhejiang 315899 (CN); VIRIDI E-MOBILITY TECHNOLOGY (NINGBO) CO., LTD., Ningbo, Zhejiang 315336 (CN); Zhejiang Geely Holding Group Co., Ltd., Hangzhou, Zhejiang 310051 (CN)
(72) Inventor: TAI, Jian, Ningbo, Zhejiang 315899 (CN); CHEN, Zhihuan, Ningbo, Zhejiang 315899 (CN); TAO, Yingjie, Ningbo, Zhejiang 315899 (CN); QIN, Jianping, Ningbo, Zhejiang 315899 (CN); WANG, Shuhui, Ningbo, Zhejiang 315899 (CN); DU, Peng, Ningbo, Zhejiang 315899 (CN); PAN, Fuzhong, Ningbo, Zhejiang 315899 (CN)
(74) Representative: Murgitroyd & Company
(86) International application number: PCT/CN2024/137355
(87) International publication number: WO 2025/145851

(57) **Abstract**

A composite negative electrode sheet, a preparation method thereof, and a lithium-ion battery are provided. The composite negative electrode sheet adopts a double-layer coating design, where a first active material layer and a second active material layer are sequentially disposed on a surface of the negative electrode current collector. An active material of the first active material layer is a first graphite, and an active material of the second active material layer is a second graphite. An aspect ratio and an OI value of the first graphite and an aspect ratio and an OI value of the second graphite satisfy a following relationship: 2≤(B×OIa)/(A×OIb)≤30; where A indicates the aspect ratio of the first graphite, which is from 0.1 to 0.65; OIa indicates the OI value of the first graphite, which is from 8 to 20; B indicates the aspect ratio of the second graphite, which is from 0.8 to 0.99; and OIb indicates the OI value of the second graphite, which is from 2 to 10.

## Description

This application claims priority to Chinese Patent Application No. 202410020224.2 filed with the China National Intellectual Property Administration on January 05, 2024 and entitled "COMPOSITE NEGATIVE ELECTRODE SHEET, PREPARATION METHOD THEREOF, AND LITHIUM ION BATTERY", the entire content of which is incorporated herein by reference.

### TECHNICAL FIELD

The present disclosure relates to the technical field of lithium-ion batteries, and in particular, to a composite negative electrode sheet, a preparation method thereof, and a lithium-ion battery.

### BACKGROUND

With the rapid development of the electric vehicle industry, people have imposed higher requirements on the comprehensive performance of a lithium-ion battery, especially the increasing demand for energy density and fast-charging performance. From the technical principle, the charging and discharging processes of the lithium-ion battery are accomplished through the intercalation and deintercalation of ions into and out of the positive and negative electrode active materials. Therefore, the negative electrode sheet has a significant impact on battery performance.

Traditional graphite-based negative electrode materials have advantages such as high electronic conductivity, stable structure, cost-effectiveness and environmental friendliness. However, their theoretical capacity is limited, so it is difficult to meet the ever-increasing energy density requirements of lithium-ion batteries. By increasing the coating weight and compaction of the negative electrode, although partial situations can be improved, the fast-charging performance of the cell is deteriorated. That is, the requirements for improving energy density and fast-charging performance cannot be taken into account.

### SUMMARY

The problem to be solved by the present disclosure is how to improve the comprehensive performance of the graphite-based negative electrode sheet.

To solve the above problem, the present disclosure provides a composite negative electrode sheet, including: a negative electrode current collector, a first active material layer, and a second active material layer, where the first active material layer is disposed on a surface of the negative electrode current collector, the second active material layer is disposed on a surface of the first active material layer, the first active material layer includes a first graphite, the second active material layer includes a second graphite, and an aspect ratio and an OI value of the first graphite and an aspect ratio and an OI value of the second graphite satisfy a following relationship:$2 \leq \left(B\times OIa\right) / \left(A\times OIb\right) \leq 30 ;$ where A indicates the aspect ratio of the first graphite, which is from 0.1 to 0.65; OIa indicates the OI value of the first graphite, which is from 8 to 20; B indicates the aspect ratio of the second graphite, which is from 0.8 to 0.99; and OIb indicates the OI value of the second graphite, which is from 2 to 10.

In some embodiments, the aspect ratio and the OI value of the first graphite and the aspect ratio and the OI value of the second graphite satisfy a following relationship:$2 \leq \left(B\times OIa\right) / \left(A\times OIb\right) \leq 10 .$

In some embodiments, the aspect ratio and the OI value of the first graphite and the aspect ratio and the OI value of the second graphite satisfy a following relationship:$3 \leq \left(B\times OIa\right) / \left(A\times OIb\right) \leq 6 .$

In some embodiments, the aspect ratio A of the first graphite is from 0.3 to 0.6.

In some embodiments, the aspect ratio B of the second graphite is from 0.8 to 0.95.

In some embodiments, the OI value OIa of the first graphite is from 8 to 14.

In some embodiments, the OI value OIb of the second graphite is from 2 to 6.

The present disclosure further provides a preparation method of a composite negative electrode sheet, used for preparing the composite negative electrode sheet as described above, including:
obtaining a first active material slurry by mixing a first graphite, a first dispersant, a first conductive agent and a first binder in first deionized water; obtaining a second active material slurry by mixing a second graphite, a second dispersant, a second conductive agent and a second binder in second deionized water; where a relationship between an aspect ratio and an OI value of the first graphite and an aspect ratio and an OI value of the second graphite is: 2≤(B×OIa)/(A×OIb)≤30; where A indicates the aspect ratio of the first graphite, which is from 0.1 to 0.65; OIa indicates the OI value of the first graphite, which is from 8 to 20; B indicates the aspect ratio of the second graphite, which is from 0.8 to 0.99; and OIb indicates the OI value of the second graphite, which is from 2 to 10; and
coating the first active material slurry on a surface of a negative electrode current collector, coating the second active material slurry on a surface of the first active material slurry, where after drying, the first active material slurry forms a first active material layer, and where after drying, the second active material slurry forms a second active material layer, so as to to obtain a composite negative electrode sheet after pressing and slitting.

In some embodiments, the first dispersant includes carboxymethyl cellulose, the first conductive agent includes conductive carbon black, the first binder includes chloroprene rubber, the second dispersant includes carboxymethyl cellulose, the second conductive agent includes conductive carbon black, and the second binder includes chloroprene rubber.

The present disclosure further provides a lithium-ion battery, including a positive electrode sheet, a negative electrode sheet, an electrolyte, and a separator, where the negative electrode sheet is the composite negative electrode sheet as described above.

In the present disclosure, by adopting a double-layer coating design, the first active material layer and the second active material layer are sequentially coated on the surface of the negative electrode current collector, where the two active material layers respectively use graphite with different aspect ratios and OI values. The aspect ratios and the OI values of the two layers of graphite form a mutually constraining relationship, which collectively affect the energy density, fast-charging performance and cycle performance of the composite negative electrode sheet. The aspect ratios and the OI values of graphite in the two layers of active material layers are jointly controlled, so that they are respectively selected within respective value ranges while satisfying a certain proportional relationship, and a high compaction density of electrode sheet and a low film resistance are finally obtained. The lithium-ion battery prepared using the composite negative electrode sheet of the present disclosure exhibits the advantages of high energy density, high cycle performance, and high fast-charging performance.

### BRIEF DESCRIPTION OF DRAWINGS

FIG. 1 is a schematic structural diagram of a composite negative electrode sheet according to an embodiment of the present disclosure.
FIG. 2 is another schematic structural diagram of a composite negative electrode sheet according to an embodiment of the present disclosure.
FIG. 3 is a preparation method of a composite negative electrode sheet according to an embodiment of the present disclosure.

Description of reference numerals:
1-negative electrode current collector, 2-first active material layer, and
3-second active material layer.

### DETAILED DESCRIPTION

A traditional graphite-based negative electrode sheet is composed of a current collector and a negative electrode film, and the negative electrode film includes graphite, a conductive agent and a binder, and is coated on the current collector at one time in a coating process, dried and rolled to obtain a negative electrode sheet, where the pore distribution in the electrode sheet is uniform.

Studies have shown that during the battery charging process, the diffusion behavior of lithium ions in the negative electrode sheet exhibits a gradient change. For example, the lithium ion diffusion rate is higher at a side away from the current collector, and the lithium ion diffusion rate is lower at a side close to the current collector. When the lithium ion concentration at the side away from the current collector exceeds the kinetic performance withstand limit of graphite, lithium metal will plate on the surface of the negative electrode sheet, resulting in rapid capacity decay of the battery and potential safety hazards.

Theoretically, the above lithium metal plating problem can be effectively solved by using high-kinetics graphite to prepare the negative electrode sheet, however, the use of high-kinetics graphite to prepare the negative electrode sheet is often accompanied by a high porosity of the electrode sheet, which is not conducive to the design of the high energy density cell. Moreover, many side reactions occur between the high-kinetics graphite and the electrolyte, which lead to rapid capacity decay of the cell during cycling and are not conducive to the improvement of the comprehensive performance of the cell.

In view of the problems of low energy density and poor fast-charging performance of traditional graphite-based negative electrode sheets, the present disclosure provides a composite negative electrode sheet. While effectively improving the fast-charging performance of the negative electrode sheet, it ensures high energy density and better cycle performance, and its energy density and fast-charging performance are significantly improved compared with those of the traditional graphite-based negative electrode sheet.

To make the above objects, features and advantages of the present disclosure more obvious and understandable, specific embodiments of the present disclosure will be described in detail below with reference to the accompanying drawings.

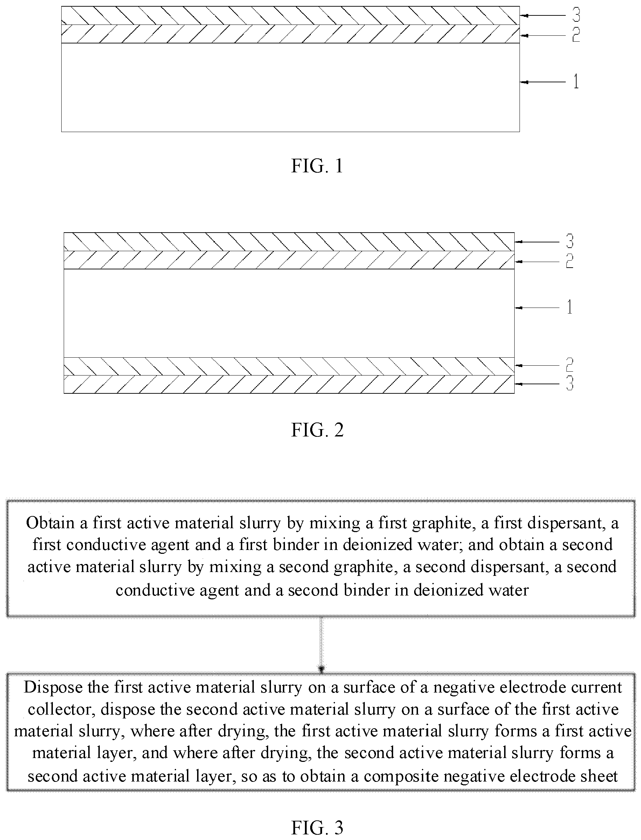

Referring to FIG. 1 and FIG. 2, a composite negative electrode sheet according to an embodiment of the present disclosure includes a negative electrode current collector 1, a first active material layer 2 and a second active material layer 3. The first active material layer 2 is disposed on a surface of the negative electrode current collector 1, and the second active material layer 3 is disposed on a surface of the first active material layer 2. The first active material layer 2 includes a first graphite, the second active material layer 3 includes a second graphite, and an aspect ratio and an OI (orientation index) value of the first graphite and an aspect ratio and an OI value of the second graphite satisfy a following relationship:$2 \leq \left(B\times OIa\right) / \left(A\times OIb\right) \leq 30 ;$ where A indicates the aspect ratio of the first graphite, which is from 0.1 to 0.65; OIa indicates the OI value of the first graphite, which is from 8 to 20; B indicates the aspect ratio of the second graphite, which is from 0.8 to 0.99; and OIb indicates the OI value of the second graphite, which is from 2 to 10.

The inventors have found through extensive experimental research and data analysis that the aspect ratios and OI values (graphitic orientation) of the second graphite and the first graphite in the composite negative electrode sheet are the main factors affecting their energy density, fast-charging performance and cycle performance.

The aspect ratio represents the ratio of the minimum Feret diameter to the maximum Feret diameter of a particle, and is typically used to screen elongated particles or spherical particles. The aspect ratio reflects the morphology of graphite particles. Graphite with a lower aspect ratio has a higher degree of flatness, and during roll pressing, the particles pack more tightly, resulting in a higher compaction density of the prepared negative electrode sheet. Meanwhile, a lower aspect ratio also leads to significant surface anisotropy of the graphite particles, or in other words, a lower degree of surface isotropy of the graphite, which is unfavorable for rapid intercalation and deintercalation of lithium ions, resulting in poor fast-charging performance. Graphite with a higher aspect ratio has a higher degree of sphericity, a more obvious degree of surface isotropy, and a lower charge transfer resistance, which facilitates rapid intercalation and deintercalation of lithium ions, leading to better fast-charging performance. Meanwhile, a higher aspect ratio also causes loose stacking of graphite particles during roll pressing, resulting in a lower compaction density of the prepared negative electrode sheet.

The OI value of graphite is an index for measuring the conductivity performance of the graphite material, and indicates the ratio of the resistivity of the graphite material to the vacuum resistivity. The OI value of the graphite reflects the crystal plane orientation of the graphite particles. Graphite with a higher OI value has a crystal structure that is more similar to a parallel arrangement, a higher true density of the particles, fewer intercalation channels for lithium ions and a longer intercalation path, resulting in poorer fast-charging performance. Graphite with a lower OI value has a crystal structure that is more similar to a perpendicular arrangement, a lower true density of the particles, more intercalation channels for lithium ions and a shorter intercalation path, resulting in better fast-charging performance. It can be seen that the OI value directly affects the fast-charging performance of graphite.

The inventors also have found through research and analysis that by jointly controlling the aspect ratio and OI value of the first graphite and the second graphite in the composite negative electrode sheet, the negative electrode sheet can have both high energy density, high fast-charging performance and high cycle performance.

For example, when the lower limit of (B×OIa)/(A×OIb) is less than 2 due to a too low aspect ratio B of the second graphite, or a too low OI value OIa of the first graphite, or a too high aspect ratio A of the first graphite, or a too high OI value OIb of the second graphite, the comprehensive performance of the battery is poor. This is because when the aspect ratio B of the second graphite is too low, the degree of the surface isotropy thereof is low, and the active sites available for the intercalation and deintercalation of lithium ions are small, resulting in poor fast-charging performance of the battery. When the OI value OIb of the second graphite is too high, there are fewer active sites for the intercalation of lithium ions into the second graphite and the intercalation path is longer, which also leads to poor fast-charging performance of the battery. When the aspect ratio A of the first graphite is too high, the particles of the first graphite are accumulated too loose, which is not conducive to the improvement of the energy density of the battery, and there are many side reactions between the first graphite and the electrolyte, resulting in poor cycle performance of the battery. When the OI value OIa of the first graphite is too low, there are too many sites on the graphite surface available for the intercalation of lithium ions, which also leads to increased side reactions between the first graphite and the electrolyte, resulting in a decrease in cycle performance of the battery.

When the upper limit of (B×OIa)/(A×OIb) exceeds 30 due to a too high OI value OIa of the first graphite, or a too low aspect ratio A of the first graphite, or a too low OI value OIb of the second graphite, the comprehensive performance of the battery is also poor. This is because when the OI value OIa of the first graphite is too high, the first graphite can provide too few active sites for the intercalation of lithium ions and the path is too long, resulting in poor fast-charging performance of the battery. When the aspect ratio A of the first graphite is too low, it also leads to too few active sites in the first graphite for the intercalation of lithium ions, resulting in deterioration of the fast-charging performance. When the OI value OIb of the second graphite is too low, there are too many active sites on the surface of the second graphite available for the intercalation of lithium ions, leading to increased side reactions between the electrolyte and the graphite, and thus poor cycle performance.

In this embodiment, the aspect ratio A of the first graphite is from 0.1 to 0.65, and the aspect ratio B of the second graphite is from 0.8 to 0.99. The first active material layer is designed as high-compaction flat graphite to obtain the high energy density electrode, and the second active material layer is designed as low-compaction spherical graphite to obtain the high fast-charging electrode. Through a reasonable combination of the aspect ratios of graphite in the first active material layer and the second active material layer, the electrode sheet has high energy density. In this embodiment, the OI value of the first graphite is from 8 to 20, and the OI value of the second graphite is from 2 to 10. Through a reasonable combination of the OI values of the graphite in the first active material layer and the second active material layer, it is beneficial for uniform diffusion of lithium ions inside the negative electrode sheet, thus the electrode sheet has excellent fast-charging performance.

The inventors have further found through research that the aspect ratio A of the first graphite, the OI value OIa of the first graphite, the aspect ratio B of the second graphite and the OI value OIb of the second graphite form a mutually constraining relationship, which collectively affect the energy density, fast-charging performance and cycle performance of the composite negative electrode sheet, and cannot be too large or too small at the same time. The inventors further found through extensive research that when the aspect ratio A of the first graphite, the OI value OIa of the first graphite, the aspect ratio B of the second graphite, and the OI value OIb of the second graphite in the composite negative electrode sheet satisfy: 2≤(B×OIa)/(A×OIb)≤30, the prepared lithium-ion battery has good comprehensive performance, and has high energy density, excellent fast-charging performance and cycle performance.

The composite negative electrode sheet of this embodiment adopts a double-layer coating design, where the first active material layer 2 and the second active material layer 3 are sequentially coated on the surface of the negative electrode current collector 1. The first active material layer 2 can be coated on one surface (as shown in FIG. 1) or two surfaces (as shown in FIG. 2) of the negative electrode current collector 1, and the second active material layer 3 is coated on the surface of the first active material layer 2. The active material of the first active material layer 2 is the first graphite, and the active material of the second active material layer 3 is the second graphite. By jointly controlling the aspect ratios and the OI values of graphite in the two layers of active material layers, both a high compaction density of the electrode sheet and a low film resistance are achieved. The lithium-ion battery prepared by using the composite negative electrode sheet of this embodiment has the characteristics of high energy density, excellent cycle performance, and excellent fast-charging performance.

In an embodiment, to better balance the relationship among the aspect ratio A of the first graphite, the OI value OIa of the first graphite, the aspect ratio B of the second graphite and the OI value OIb of the second graphite, the composite negative electrode sheet satisfies the condition: 2≤ (B×OIa)/(A×OIb)≤ 10. In an embodiment, the composite negative electrode sheet satisfies the condition: 3≤ (B×OIa)/(A×OIb)≤ 6. Satisfying the above conditions enables the lithium-ion battery to have both higher energy density, and better fast-charging performance and cycle performance.

In some embodiments, the aspect ratio A of the first graphite is from 0.3 to 0.6. The aspect ratio B of the second graphite is from 0.8 to 0.95. The OI value of the first graphite is from 8 to14. The OI value of the second graphite is from 2 to 6.

The inventors have found through research that when the aspect ratios and the OI values of the first graphite and the second graphite satisfy the above ratio relationship condition, and the aspect ratios of the first graphite and the second graphite are controlled to be within the above value ranges, the negative electrode sheet prepared by compounding the high-fast-charging low-compaction spherical graphite and the high-energy density high-compaction flat graphite has higher energy density and better fast-charging performance than the traditional graphite-based negative electrode sheet. The energy density is increased by 20% to 30%, and the fast-charging capability is increased by more than 20%.

In some embodiments, the negative electrode current collector may be copper foil. The type of the negative electrode current collector is not particularly limited, and may be selected from the prior art according to actual needs, such as the copper foil described above.

An embodiment of the present disclosure further provides a preparation method of a composite negative electrode sheet, which is used for preparing the composite negative electrode sheet as described above. Referring to FIG. 3, the preparation method includes the following steps.

A first graphite, a first dispersant, a first conductive agent and a first binder are mixed in deionized water to obtain a first active material slurry; and a second graphite, a second dispersant, a second conductive agent and a second binder are mixed in deionized water to obtain a second active material slurry. The first graphite and the second graphite are selected according to the following relational expression: 2≤ (B×OIa)/(A×OIb)≤ 30, A is from 0.1 to 0.65, B is from 0.8 to 0.99, OIa is from 8 to 20, and OIb is from 2 to 10. The dispersants, the conductive agents, and the binders used in the two slurries may be the same or different, and for convenience of description, they are collectively referred to as the dispersant, the conductive agent, and the binder hereinafter, without distinguishing between the first and the second.

The first active material slurry is coated on a surface of a negative electrode current collector 1, the second active material slurry is coated on the surface of the first active material slurry, where after drying, the first active material slurry forms a first active material layer 2, and where after drying, the second active material slurry forms a second active material layer 3, so as to obtain the composite negative electrode sheet.

In an example, a dual-die extrusion coater may be used to coat the active material slurries on one surface or both surfaces of the negative electrode current collector (copper foil). For example, the first active material slurry is coated on the surface of the copper foil, the second active material slurry is coated on the surface of the first active material slurry, and the coated electrode sheet is dried, cold pressed, and slit to obtain the composite negative electrode sheet.

In some embodiments, the dispersant is CMC (carboxymethyl cellulose), the conductive agent is conductive carbon black, and the binder is SBR (chloroprene rubber). The first active material slurry and the second active material slurry use the same dispersant, conductive agent and binder. Taking the first active material slurry as an example, the preparation method is as follows.

70% of the CMC and the conductive carbon black are added to the deionized water, and stirred at a low speed for 2h to form a conductive adhesive solution. The first graphite is added to the conductive adhesive solution, and stirred under a low viscosity and at a high speed for 1h to form a first mixed solution. The SBR is added to the first mixed solution, and stirred under a high viscosity and at a high speed for 1h to form a second mixed solution. The ethanol and the remaining 30% of CMC powder are added to the second mixed solution, and stirred under a low viscosity and at a high speed for 2h to prepare a first active material slurry. The preparation method of the second active material slurry is the same as that of the first active material slurry, except that the second graphite is added to the conductive adhesive solution.

The preparation of the first active material slurry and the second active material slurry is collectively referred to as the preparation of the negative electrode slurry. In this embodiment, only an exemplary preparation method is provided. The specific preparation method of the negative electrode slurry may also be selected from the prior art, which is not limited in this embodiment.

An embodiment of the present disclosure further provides a lithium-ion battery, including a positive electrode sheet, a negative electrode sheet, an electrolyte, and a separator, where the negative electrode sheet is the composite negative electrode sheet described above.

The beneficial effects achievable by the present disclosure will be further described below with reference to the Examples and Comparative Examples. The lithium secondary batteries of the Examples and Comparative Examples are each prepared according to the following method.

A preparation method of a lithium secondary battery, including the following steps.

### (1) Preparation of positive electrode sheet

A positive electrode active material NCM811 (a type of ternary lithium battery), a conductive agent carbon nanotube, and a binder PVDF (polyvinylidene fluoride) are mixed in a mass ratio of 94:3:4, a solvent NMP (N-methylpyrrolidone) is added, and the mixture is stirred uniformly to obtain a positive electrode slurry. The positive electrode slurry is uniformly coated on both surfaces of the positive electrode current collector aluminum foil, dried in an oven, and then cold pressed and slit to obtain a positive electrode sheet.

### (2) Preparation of composite negative electrode sheet

A first active material slurry and a second active material slurry are prepared, where in the active material slurry, the mass ratio of the negative electrode active material, the conductive carbon black, the CMC, and the SBR is 93:2:2:3, and the solid content is 50%. A specific preparation method of the active material slurry is as follows: adding deionized water, the conductive carbon black and 70% of the CMC powder to a stirring tank, and stirring at a low speed for 2h to form a conductive adhesive solution; adding a negative electrode active material to the conductive adhesive solution, stirring under a low viscosity and at a high speed for 1h to form a first mixed solution; adding the SBR to the first mixed solution, stirring under a high viscosity and at a high speed for 1h to form a second mixed solution; adding ethanol and the remaining 30% of CMC powder to the second mixed solution, stirring under a low viscosity and at a high speed for 2h to obtain a negative electrode slurry, where a volume ratio of the deionized water to the ethanol in the slurry is 9:1.

According to the conditions in Table 1, the first graphite or the second graphite is selected as the negative electrode active material. The first active material slurry uses the first graphite as the negative electrode active material, and the second active material slurry uses the second graphite as the active material. The active material slurry is uniformly coated on two surfaces of the negative electrode current collector copper foil by using a dual-die extrusion coater. The first active material slurry is coated on the surface of the copper foil, and the second active material slurry is coated on the surface of the first active material slurry. The coated electrode sheet is dried in an oven, and then subjected to cold pressing and slitting to obtain the composite negative electrode sheet.

### (3) Preparation of electrolyte

The ethylene carbonate (EC), ethyl methyl carbonate (EMC), and diethyl carbonate (DEC) are mixed in a volume ratio of 1:1:1 to obtain an organic solvent, and then the fully dried lithium salt LiPF₆ is dissolved in the mixed organic solvent at a concentration of 1 mol/L, and fully dissolved to obtain an electrolyte.

### (4) Preparation of separator

A polyethylene film is selected as the separator.

### (5) Preparation of lithium secondary battery

The positive electrode sheet, the separator, and the composite negative electrode sheet are stacked in sequence, so that the separator is placed between the positive electrode sheet and the negative electrode sheet to play a role of isolation, and then wound to obtain a bare cell. The bare cell is placed in an outer packaging shell, and after drying, the electrolyte is injected. After vacuum sealing, standing, formation, shaping, and other steps, the lithium secondary battery is obtained.

Different first graphite and second graphite are respectively selected according to Table 1, and performance tests are performed on the lithium secondary batteries prepared in the Examples and the Comparative Examples. The performance tests included kinetic performance test, cycle performance test and energy density test. It can be understood that the kinetic performance of the battery can directly affect the fast-charging performance of the battery. If the kinetic performance of the battery is good, it can accept charges more quickly during fast charging, and can maintain performance more stably during charging. On the contrary, if the kinetic performance of the battery is poor, problems such as insufficient internal reaction rate and difficult charge transport in the battery may occur during fast charging, resulting in a decrease in fast-charging performance and even potential safety hazards. Therefore, in this embodiment, the fast-charging performance of the battery is reflected by the kinetic performance test of the battery.

The test methods of the above tests are as follows.
(1) Kinetic performance test: at 25°C, the lithium secondary batteries prepared in the Examples and Comparative examples are fully charged at a rate of 4C, and fully discharged at a rate of 1C for 10 cycles. Thereafter, the lithium-ion batteries are fully charged at a rate of 4C, and then the composite negative electrode sheets are taken out, and the lithium plating on the surfaces of the composite negative electrode sheets is observed. If the area of the lithium-plating region on the surface of the composite negative electrode sheet is less than 5%, it is considered as mild lithium plating; if the area of the lithium-plating region on the surface of the composite negative electrode sheet is 5% to 40%, it is considered as moderate lithium plating; and if the area of the lithium-plating region on the surface of the composite negative electrode sheet is greater than 40%, it is considered as severe lithium plating.
(2) Cycle performance test: at 25°C, the lithium secondary batteries prepared in the Examples and Comparative examples are charged at a rate of 2C and discharged at a rate of 1C, and subjected to a full charge-discharge cycle test until the capacity of the lithium secondary batteries decayed to 80% of the initial capacity, and the number of cycles is recorded.
(3) Actual energy density test: at 25°C, the lithium-ion batteries prepared in the Examples and Comparative examples are fully charged at a rate of 1C, fully discharged at a rate of 1C, and the actual discharge energy at this time is recorded. At 25°C, the lithium-ion batteries are weighed using an electronic balance; and the ratio of the actual discharge energy of the lithium-ion battery at 1C to the weight of the lithium-ion battery is the actual energy density of the lithium-ion battery. When the actual energy density is less than 80% of the target energy density, it is considered that the actual energy density of the battery is very low. When the actual energy density is greater than or equal to 80% of the target energy density and less than 95% of the target energy density, it is considered that the actual energy density of the battery is low. When the actual energy density is greater than or equal to 95% of the target energy density and less than 105% of the target energy density, it is considered that the actual energy density of the battery is moderate. When the actual energy density is greater than or equal to 105% of the target energy density and less than 120% of the target energy density, it is considered that the actual energy density of the battery is high. When the actual energy density is above 120% of the target energy density, it is considered that the actual energy density of the battery is very high.

The test methods for the graphite parameters in the Examples and Comparative Examples are described below.

Aspect ratio of graphite: the aspect ratio of graphite is obtained using an R-3000 particle size and particle shape analyser. The powder sample is uniformly dispersed on the surface of the optical glass plate, photographed using a telecentric zoom lens, and the aspect ratio data of graphite is obtained by statistically analysing the ratio of the minimum Feret diameter to the maximum Feret diameter of the graphite particles.

OI value of graphite: the OI value of graphite is obtained using an X-ray powder diffractometer (X'pert PRO). According to the general rules for X-ray diffraction analysis method and the method for measuring graphite lattice parameters (JIS K 0131-1996 and JB/T4220-2011), an X diffraction spectrum is obtained. According to the formula VOI= C004/C110, the OI value of graphite is calculated. C004 indicates the peak area of the 004 characteristic diffraction peak, and C110 indicates the peak area of the 110 characteristic diffraction peak.

The parameters and test results of Examples 1-11 and Comparative Examples 1-5 are shown in Table 1.

**Table 1**

| Sequence number | Aspect ratio A of first graphite | OI value OIa of first graphite | Aspect ratio B of second graphite | OI value OIb of second graphite | (B×OIa)/ (A×OIb) | Actual energy density | Kinetic performance | Number of Cycles |
|---|---|---|---|---|---|---|---|---|
| Example 1 | 0.53 | 11.2 | 0.8 | 6.9 | 2.5 | high | mild lithium plating | 2632 |
| Example 2 | 0.53 | 11.2 | 0.82 | 6.4 | 2.7 | high | mild lithium plating | 2554 |
| Example 3 | 0.53 | 11.2 | 0.84 | 5.2 | 3.4 | moderate | no lithium plating | 2487 |
| Example 4 | 0.53 | 11.2 | 0.87 | 4.2 | 4.4 | moderate | no lithium plating | 2409 |
| Example 5 | 0.53 | 11.2 | 0.89 | 3.3 | 5.7 | moderate | no lithium plating | 2321 |
| Example 6 | 0.41 | 15.5 | 0.89 | 3.3 | 10.2 | high | mild lithium plating | 2554 |
| Example 7 | 0.49 | 13.7 | 0.89 | 3.3 | 7.5 | moderate | no lithium plating | 2502 |
| Example 8 | 0.57 | 10.8 | 0.89 | 3.3 | 5.1 | moderate | no lithium plating | 2428 |
| Example 9 | 0.62 | 10.1 | 0.89 | 3.3 | 4.4 | low | no lithium plating | 2387 |
| Example 10 | 0.64 | 9.3 | 0.89 | 3.3 | 3.9 | low | no lithium plating | 2332 |
| Example 11 | 0.18 | 18.4 | 0.92 | 3.3 | 28.5 | low | mild lithium plating | 2117 |
| Comparative Example 1 | 0.14 | 19.8 | 0.89 | 3.3 | 38.1 | very high | severe lithium plating | 2672 |
| Comparative Example 2 | 0.2 | 18.7 | 0.95 | 1.7 | 52.3 | very high | severe lithium plating | 2098 |
| Comparative Example 3 | 0.84 | 5.2 | 0.8 | 6.9 | 0.7 | very low | no lithium plating | 1133 |
| Comparative Example 4 | 0.71 | 7.2 | 0.82 | 6.4 | 1.3 | very low | no lithium plating | 1351 |
| Comparative Example 5 | 0.43 | 6.5 | 0.9 | 3.3 | 4.1 | low | moderate lithium plating | 1573 |

Overall, in Examples 1-11, for each composite negative electrode sheet, the aspect ratio A of the first graphite, the OI value OIa of the first graphite, the aspect ratio B of the second graphite, and the OI value OIb of the second graphite satisfy the condition: 2≤(B×OIa)/(A×OIb)≤30, while none of the Comparative examples 1-4 satisfies the above condition. By comparing the test results of Examples 1-10 and Comparative Examples 1-4, it can be seen that when the aspect ratio A of the first graphite, the OI value OIa of the first graphite, the aspect ratio B of the second graphite, and the OI value OIb of the second graphite in the composite negative electrode sheet satisfy the condition: 2≤(B×OIa)/(A×OIb)≤30, the lithium-ion battery exhibits better energy density, kinetic performance, and cycle performance, as reflected in a high or moderate energy density, no lithium plating or mild lithium plating on the surface of the negative electrode sheet, and a high number of cycles. This is mainly attributed to the good combination of the first graphite and the second graphite in the composite negative electrode sheet provided in the Examples of the present disclosure: the second graphite with a high aspect ratio and low OI value provides excellent kinetic performance for the composite negative electrode sheet, and the first graphite with a low aspect ratio and high OI value provides high energy density and excellent cycling performance for the composite negative electrode sheet, ultimately resulting in excellent comprehensive performance of the prepared battery.

When the upper limit of (B×OIa)/(A×OIb) exceeds 30 due to a too high OI value OIa of the first graphite, or a too low aspect ratio A of the first graphite, or a too low OI value OIb of the second graphite in the composite negative electrode sheet, the comprehensive performance of the battery is poor. For example, in Comparative Example 1 and Comparative Example 2, (B×OIa)/(A×OIb) is much greater than 30, the surface of the negative electrode sheet of the battery shows severe lithium plating. In Comparative Example 2, the number of cycles is only 2098.

When the lower limit of (B×OIa)/(A×OIb) is less than 2 due to a too low aspect ratio B of the second graphite, or a too low OI value OIa of the first graphite, or a too high aspect ratio A of the first graphite, or a too high OI value OIb of the second graphite in the composite negative electrode sheet, the comprehensive performance of the battery is also poor. For example, in Comparative Example 3 and Comparative Example 4, (B×OIa)/(A×OIb) is less than 2, the energy density of the cell is very low, and the number of cycles is only 1133 and 1351.

From Example 1 to Example 5, the aspect ratio and OI value of the first graphite do not change, the aspect ratio of the second graphite gradually increases, and the OI value of the second graphite gradually decreases, resulting in a gradual increase in (B×OIa)/(A×OIb). From Example 6 to Example 10, the aspect ratio and OI value of the second graphite do not change, the aspect ratio of the first graphite gradually increases, and the OI value of the second graphite gradually decreases, resulting in a gradual decrease in (B×OIa)/(A×OIb). The larger aspect ratio and the smaller OI value are beneficial for improving the fast-charging performance of the battery, but are detrimental to improving the compaction density of the negative electrode sheet. Therefore, from Example 1 to Example 5, and from Example 6 to Example 10, the energy density and the number of cycles show a decreasing trend, but the lithium plating condition on the surface of the negative electrode sheet is improved.

It can be seen from Comparative Examples 1, 2, 5 that to ensure good comprehensive performance of the battery, the condition 1 (2≤(B×OIa)/(A×OIb)≤30) and the condition 2 (A is from 0.1 to 0.65, OIa is from 8 to 20, B is from 0.8 to 0.99, and OIb is from 2 to 10) are both indispensable. The detailed analysis is as follows.

In each of Comparative Example 1 and Comparative Example 2, the aspect ratio A of the first graphite, the aspect ratio B of the second graphite, the OI value OIa of the first graphite, and the OI value OIb of the second graphite satisfy respective value ranges, that is, A is from 0.1 to 0.65, OIa is from 8 to 20, B is from 0.8 to 0.99, and OIb is from 2 to 10, but (B×OIa)/(A×OIb) is greater than 30, which does not satisfy 2≤(B×OIa)/(A×OIb)≤30. As a result, in Comparative Example 1 and Comparative Example 2, the surfaces of the negative electrode sheets exhibit severe lithium plating, and the number of cycles is also low. It can be seen that although the aspect ratios and the OI values of the first graphite and the second graphite are selected within respective value ranges, since the ratio relationship among each other is not satisfied, the result is poor, and high energy density, high cycle performance and excellent kinetic performance cannot be achieved.

In Comparative Example 5, although the aspect ratios and OI values of the first graphite and the second graphite satisfy 2≤(B×OIa)/(A×OIb)≤30, the OI value OIa of the first graphite is not within the value range of 8 to 20. Even if the ratio relationship between the aspect ratios and the OI values of the first graphite and the second graphite is satisfied, the comprehensive performance of the battery is still poor. It can be seen from Table 1 that in Comparative Example 5, the energy density is low, the surface of the negative electrode sheet exhibits moderate lithium plating, and the number of cycles is only 1573.

Although the present disclosure is disclosed as above, the protection scope of the present disclosure is not limited thereto. Those skilled in the art can make various changes and modifications without departing from the spirit and scope of the present disclosure, and these changes and modifications shall fall within the protection scope of the present disclosure.

## Claims

1. A composite negative electrode sheet, comprising: a negative electrode current collector, a first active material layer, and a second active material layer, wherein the first active material layer is disposed on a surface of the negative electrode current collector, the second active material layer is disposed on a surface of the first active material layer,
**characterized in that**:
the first active material layer comprises a first graphite, the second active material layer comprises a second graphite, and an aspect ratio and an OI value of the first graphite and an aspect ratio and an OI value of the second graphite satisfy a following relationship:
$2 \leq \left(B\times OIa\right) / \left(A\times OIb\right) \leq 30 ;$
wherein A indicates the aspect ratio of the first graphite, which is from 0.1 to 0.65; OIa indicates the OI value of the first graphite, which is from 8 to 20; B indicates the aspect ratio of the second graphite, which is from 0.8 to 0.99; and OIb indicates the OI value of the second graphite, which is from 2 to 10.

2. The composite negative electrode sheet according to claim 1, wherein the aspect ratio and the OI value of the first graphite and the aspect ratio and the OI value of the second graphite satisfy a following relationship: $2 \leq \left(B\times OIa\right) / \left(A\times OIb\right) \leq 10 .$

3. The composite negative electrode sheet according to claim 1, wherein the aspect ratio and the OI value of the first graphite and the aspect ratio and the OI value of the second graphite satisfy a following relationship: $3 \leq \left(B\times OIa\right) / \left(A\times OIb\right) \leq 6 .$

4. The composite negative electrode sheet according to claim 1, wherein the aspect ratio A of the first graphite is from 0.3 to 0.6.

5. The composite negative electrode sheet according to claim 1, wherein the aspect ratio B of the second graphite is from 0.8 to 0.95.

6. The composite negative electrode sheet according to claim 1, wherein the OI value OIa of the first graphite is from 8 to 14.

7. The composite negative electrode sheet according to claim 1, wherein the OI value OIb of the second graphite is from 2 to 6.

8. A preparation method of a composite negative electrode sheet, used for preparing the composite negative electrode sheet according to any one of claims 1 to 7, comprising:
obtaining a first active material slurry by mixing a first graphite, a first dispersant, a first conductive agent and a first binder in first deionized water; and obtaining a second active material slurry by mixing a second graphite, a second dispersant, a second conductive agent and a second binder in second deionized water;
wherein a relationship between an aspect ratio and an OI value of the first graphite and an aspect ratio and an OI value of the second graphite is: 2≤(B×OIa)/(A×OIb)≤30; wherein A indicates the aspect ratio of the first graphite, which is from 0.1 to 0.65; OIa indicates the OI value of the first graphite, which is from 8 to 20; B indicates the aspect ratio of the second graphite, which is from 0.8 to 0.99; and OIb indicates the OI value of the second graphite, which is from 2 to 10; and
coating the first active material slurry on a surface of a negative electrode current collector, coating the second active material slurry on a surface of the first active material slurry, wherein after drying, the first active material slurry forms a first active material layer, and after drying, the second active material slurry forms a second active material layer, so as to obtain a composite negative electrode sheet.

9. The preparation method of a composite negative electrode sheet according to claim 8, wherein
the first dispersant comprises carboxymethyl cellulose,
the first conductive agent comprises conductive carbon black,
the first binder comprises chloroprene rubber,
the second dispersant comprises carboxymethyl cellulose,
the second conductive agent comprises conductive carbon black, and
the second binder comprises chloroprene rubber.

10. A lithium-ion battery, comprising a positive electrode sheet, a negative electrode sheet, an electrolyte, and a separator, wherein the negative electrode sheet is the composite negative electrode sheet according to any one of claims 1 to 7.
